# EUROPEAN PATENT APPLICATION

(11) **EP 1 286 157 A2**
(43) Date of publication of application: **26.02.2003**
(21) Application number: 02018644.1
(22) Date of filing: 20.08.2002
(51) Int. Cl.: G01N 29/10

(54) **Vibration analysis of sheet material**

(30) Priority: 21.08.2001 JP 2001250384; 08.05.2002 JP 2002132809; 25.07.2002 JP 2002216641
(71) Applicant: CANON KABUSHIKI KAISHA, Ohta-ku, Tokyo (JP)
(72) Inventor: Nojiri, Hidetoshi, Tokyo (JP); Kaneko, Norio, Tokyo (JP); Kawasaki, Takehiko, Tokyo (JP); Shido, Shunichi, Tokyo (JP); Nakanishi, Koichiro, Tokyo (JP); Hokayama, Kozo, Tokyo (JP)
(74) Representative: Leson, Thomas Johannes Alois, Dipl.-Ing.

(57) **Abstract**

A signal output apparatus comprises a vibration applying unit that contacts with and applies a vibration to a sheet, and a detection unit that outputs a signal by the vibration. An apparatus for determining a type of a sheet comprises a vibration applying unit that contacts with and applies a vibration to a sheet, and a detection unit that outputs a signal by the vibration, wherein a type of the sheet is determined on the basis of the signal from said detection unit. An image forming apparatus comprises a vibration applying unit that contacts with and applies a vibration to a sheet, and a detection unit that outputs a signal by the vibration.

A method for determining a type of sheet comprises the steps of contacting with and applying vibration to sheet, outputting a signal from a detection unit owing to the contacting and applying step, and determining a type of sheet on the basis of the signal.

## Description

### BACKGROUND OF THE INVENTION

### Field of the Invention

The present invention relates to a signal output apparatus. In addition, the present invention relates to a detection apparatus that detects information on sheet material that is used in an image forming apparatus and a sheet conveying apparatus, etc. and an image forming apparatus etc. that comprise the detection apparatus.

### Related Background Art

A method for determining the type of sheet material is described in Japanese Patent Application Laid-Open No. 11-314443 (U.S. patent No. 6097497).

The technology described in this gazette is the technology of applying some numeric code or a mark on sheet material itself beforehand (hereafter, this is described as a "marking method"), reading information on the numeric code etc. concerned with a sensor provided in a printer, and optimizing a print mode by using this information by the printer concerned.

### SUMMARY OF THE INVENTION

However, it is not possible with the above-mentioned marking method to determine the type of sheet material to which a numeric code is not applied.

Then, the object of the present invention is to provide a signal output apparatus and a method that can output information on the type of sheet material even if a code such a number is not applied to the sheet material beforehand. It becomes possible to perform optimal various controls according to sheet material if a signal outputted by the present invention is used.

The signal output apparatus according to the present invention is characterized in having a vibration applying unit that contacts with and applies vibration to sheet material (sheet), and a detection unit that outputs a signal by the vibration.

The above-mentioned detection units may be installed on both of a top side and a back side of the above-mentioned sheet material. In addition, the above-mentioned detection unit may have two or more faces contacting with the above-mentioned sheet material. Furthermore, the apparatus for determining the type of sheet material has a mechanism that controls a gap between the above-mentioned vibration applying unit and the above-mentioned sheet material, and can change a state from the non-contact state of the above-mentioned vibration applying unit and sheet material to the contact state of both members when the above-mentioned vibration is applied.

An apparatus for determining the type of sheet material according to the present invention is characterized in comprising a vibration applying unit that contacts with and applies vibration to sheet material, and a detection unit that outputs a signal by the vibration, and determines a type of the sheet material.

The type of the above-mentioned sheet material is determined by using information on the sheet material, stored beforehand, and the signal from the above-mentioned detection unit.

The type of the above-mentioned sheet material is determined by using a peak value of an output signal from the above-mentioned detection unit, the difference between the wave forms or phases of the vibration, which the vibration applying unit applies, and the signal that the detection unit outputs.

An image forming apparatus according to the present invention is characterized in having a vibration applying unit that contacts with and applies vibration to sheet material, and a detection unit that outputs a signal according to the vibration.

Then, the above-mentioned image forming apparatus sets a condition of a controlled object on the basis of the signal from the above-mentioned detection unit.

When the above-mentioned image forming apparatus forms an image by ejecting ink, the above-mentioned controlled object is, for example, ink ejection quantity. When the above-mentioned image forming apparatus forms an image by using toner, the above-mentioned controlled object is, for example, the temperature of sheet material, an interval between conveying rollers, or conveying speed. When the above-mentioned image forming apparatus forms an image with a thermal head, the above-mentioned controlled object is, for example, supply power to the above-mentioned thermal head.

A method for determining the type of sheet material according to the present invention is characterized in comprising a first step of contacting with and applying vibration to sheet material, a second step of outputting a signal from a detection unit owing to the first step, and a third step of determining a type of the sheet material on the basis of the signal.

A system of determining a type of sheet material according to the present invention is characterized in performing a first step of contacting with and applying vibration to sheet material and a second step of outputting a signal from a detection unit owing to the first step in an image forming apparatus, and determining a type of the sheet material on the basis of the above-mentioned signal by a computer inside the image forming apparatus or a computer connected to the image forming apparatus outside the image forming apparatus.

### BRIEF DESCRIPTION OF THE DRAWINGS

FIG. 1 is a diagram to explain a signal output apparatus according to the present invention;
FIG. 2 is a flow chart to explain determination steps of a type of sheet material according to the present invention;
FIG. 3 is a flow chart to explain determination steps of a type of sheet material according to the present invention;
FIG. 4 is a diagram to explain an example of a signal output apparatus according to the present invention;
FIGS. 5A, 5B, and 5C are diagrams to explain a signal output apparatus according to the present invention;
FIG. 6 is a graph showing an output signal from a signal output apparatus according to the present invention;
FIGS. 7A and 7B are drawings to explain an example of a vibration applying unit according to the present invention;
FIGS. 8A and 8B are drawings to explain an example of a detection unit according to the present invention;
FIG. 9 is a block diagram showing an example of processing of a signal from a detection unit according to the present invention;
FIG. 10 is a block diagram showing an example of processing of a signal from a detection unit according to the present invention;
FIG. 11 is a diagram showing an example of a detection unit according to the present invention;
FIGS. 12A and 12B are diagrams showing another example of a detection unit according to the present invention;
FIGS. 13A and 13B are diagrams showing still another example of a detection unit according to the present invention;
FIGS. 14A and 14B are diagrams showing an example of a detection unit according to the present invention;
FIG. 15 is a diagram showing an example of a signal processing apparatus according to the present invention;
FIG. 16 is a graph showing an example of an output signal by a signal processing apparatus according to the present invention;
FIG. 17 is a block diagram showing an example of signal processing according to the present invention; and
FIG. 18 is a drawing to explain the present invention.

### DESCRIPTION OF THE PREFERRED EMBODIMENTS

Hereafter, the present invention will be specifically explained.

A signal output apparatus will be explained in a first embodiment according to the present invention, a method and an apparatus for determining the type of sheet material will be explained in a second embodiment, and an apparatus and a system, each of which comprises a function of determining a type of sheet material, according to the present invention will be explained in a third embodiment.

### (Embodiment 1: Signal output apparatus)

### - Apparatus structure and principle/action -

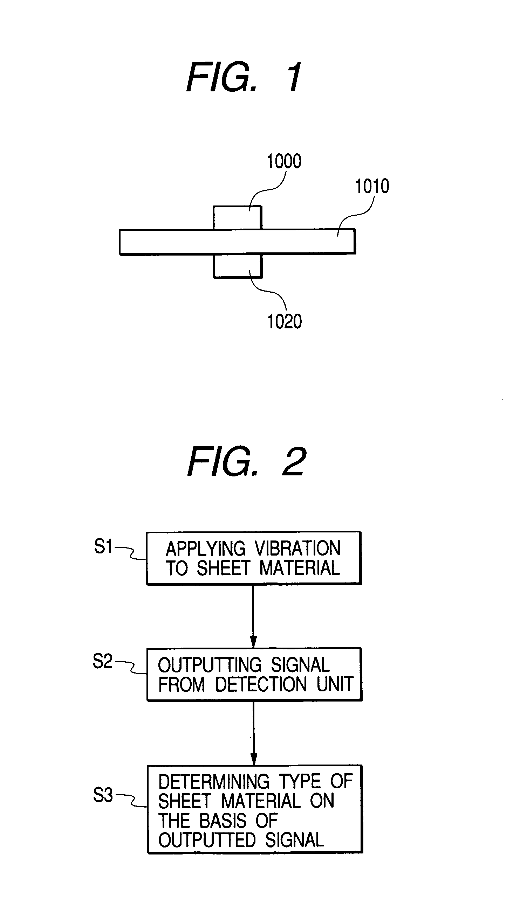

A signal output apparatus according to the present invention comprises a vibration applying unit, and a detection unit outputting a signal caused by vibration. FIG. 1 is a schematic diagram of a signal output apparatus according to the present invention.

In the diagram, a vibration applying unit 1000 contacts with sheet material 1010, and applies vibration from the outside of the sheet material. A detection unit 1020 outputs a signal by the vibration.

The present invention is derived from a fact that the present inventor found that a signal outputted from the detection unit differ with depending on a type of sheet material when predetermined vibration is applied to the sheet material. In addition, it is conceivable that a reason why the output signal according to a type of sheet material differs is mainly based on the difference of surface irregularity, thickness, density, or acoustic characteristics of the sheet material.

### - Sheet material -

The sheet material in the present invention also includes paper, paper-like material, a plastic sheet, and recording media (including disk type recording media such as CD-ROM), which are material where each image can be formed, and printed matters and notes, where each image has been already formed.

### - Vibration -

The vibration in the present invention is vibration applied from the outside to sheet material by a vibration element that contacts with the sheet material. The amplitude of applied vibration is, for example, a range of several mV to tens of volts. In addition, the direction of the vibration is acceptable even if it is a surface direction or a thickness direction of sheet material. Furthermore, it is also preferable to perform measurement with changing the direction of the vibration when sheet material has anisotropic structure (surface and inside).

A suitable frequency range is, for example, from tens of kHz to tens of MHz.

The frequency of the vibration may be also fixed, or it is also possible to perform measurement with changing several frequencies or with continuously changing (sweeping) the frequency. In addition, an acceptable frequency is a single frequency, a modulated frequency, or that of noise where a lot of frequencies are superimposed. Furthermore, since it is possible to obtain vibration with large amplitude by using a resonance frequency of the vibration applying unit or an adjacent frequency, it leads to the improvement of detection sensitivity.

It is also good to intermittently apply two or more times of vibration to sheet material as the vibration applied to the sheet material.

It is possible to make a vibration applying unit 1000 and sheet material 1010 contact at the time of vibration from a non-contact state of both members. In such a case, when the vibration is applied, the distance between the vibration applying unit 1000 and the detection unit 1020 is changed. More specifically, after the distance between the vibration applying unit and the detection unit becomes short in the application of vibration and the detection unit outputs a signal, the distance between the two becomes long.

In addition, it is also good to apply the vibration to the sheet material 1010 with keeping the state that the vibration applying unit 1000 and sheet material 1010 contact beforehand. Furthermore, it is desirable that the detection unit 1020 contacts with the sheet material as well as the vibration applying unit 1000 so as to effectively detect the vibration applied to the sheet material.

When the vibration is applied, it is possible to make the sheet material 1010 stationary. It is also good to include information on a surface of the sheet material in the output signal by applying the vibration when the sheet material is not stationary (i.e., when being transported).

Although the vibration may be applied when the sheet material moves (i.e., when being conveyed), it is preferable to apply the vibration when the sheet material is stationary. Here, a stationary state means the state that sheet material is not conveyed, or that the sheet material stops temporarily when being conveyed, and hence, means the state that the sheet material is substantially stationary.

It is also good to vibrate the vibration applying unit concerned before the vibration applying unit and sheet material contact, or to vibrate the vibration applying unit concerned after both contact.

In addition, after applying the predetermined vibration to the sheet material, so as to convey the sheet material, it is also possible to make the vibration applying unit and sheet material non-contact again.

That is, the distance between the sheet material and the vibration applying unit after a vibration is applied varies from that before the vibration is applied.

Furthermore, it is also possible to make the structure of applying vibration to an edge of sheet material.

A piezoelectric element, an electromagnetic element, and an electrostatic element, etc. can be used for the vibration applying unit in the present invention.

In addition, although the case where the vibration applying unit 1000 and detection unit 1020 are separately provided through sheet material is shown in FIG. 1, it is also possible to provide a function serving as a detection unit for the vibration applying unit itself. For example, a piezoelectric element that constitutes the vibration applying unit is vibrated to apply vibration to sheet material, and after the vibration of the piezoelectric element concerned is stopped once, the reverberation in the sheet material is detected by the piezoelectric element concerned. Alternately, it is made to contact with the sheet material while vibrating the piezoelectric element that constitutes the vibration applying unit, and to detect a change in a resonance frequency or an amplitude of the piezoelectric element.

### - Detection unit -

The detection unit 1020 outputs a signal by the vibration applied to sheet material.

The signal outputted from the detection unit 1020 is a signal of reflecting the acoustic characteristics, thickness, density, basis weight (basis weight of the sheet material is the weight of the sheet material by 1 m²), or surface irregularity. There are electrical signals such as a voltage, an electric current, resistance, electrostatic capacity, and impedance, a light signal, etc. as forms of the outputted signal. The element that outputs the electrical signal is, for example, a piezoelectric element.

In addition, it is good to constitute the detection unit 1020 so that the signal may be outputted for the first time by applying vibration to sheet material, or it is also good to constitute the detection unit 1020 so that the output signal may change by applying the vibration. Furthermore, it is also good to change a condition of applied vibration so that a predetermined signal is outputted from a detection unit instead of applying predetermined vibration to sheet material.

In addition, the detection unit directly or indirectly detects the vibration propagating in sheet material, or the vibration attenuated by the sheet material instead of the vibration (action) applied to the sheet material.

Furthermore, the detection unit may also detect sound (sound wave) generated when vibration is applied to sheet material. In that case, the detection unit need not contact to the sheet material.

If it is used that the signal is outputted by the vibration, it is also possible to use the above-mentioned signal output apparatus as a vibration detection apparatus.

In addition, so as to be able to detect the vibration propagating in sheet material effectively, for example, the pressure of 1 kPa or more to 100 kPa or less, or the pressure of 2 kPa or more to 50 kPa or less is applied between the detection unit and sheet material.

Hereafter, a method of using the above-mentioned signal output apparatus for determining the type of sheet material, and a determination apparatus will be explained.

### - Specific structure of vibration applying unit and detection unit -

Next, the specific structure of the vibration applying unit and detection unit will be explained.

In addition, so long as it has the structure of being able to apply vibration to sheet material and to output a signal from the detection unit, the present invention is not limited to the structure explained below.

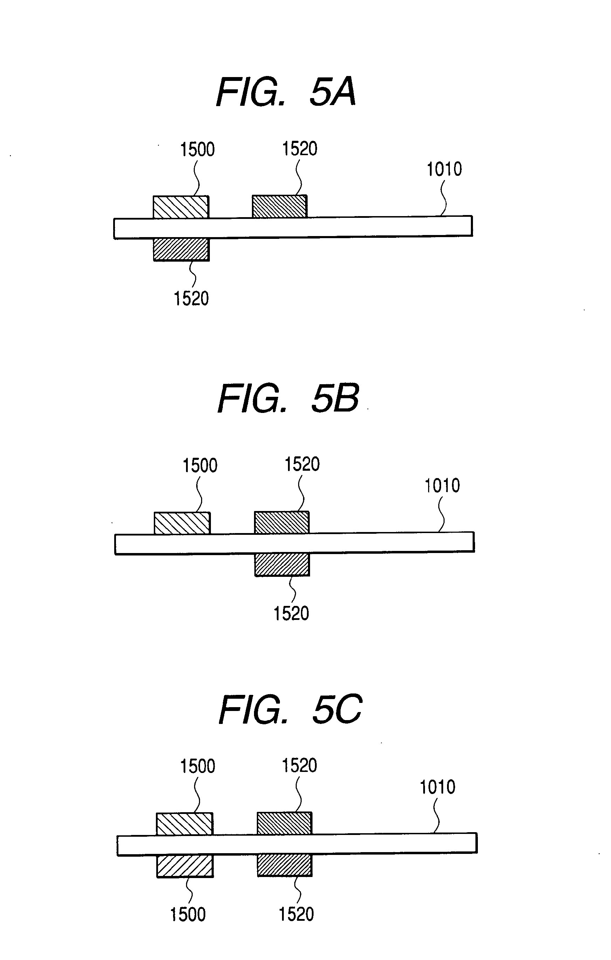

FIG. 4 is a schematic diagram of the paper conveying mechanism used to arrange an edge of printing paper inserted from a tray in an ink jet printer. Reference numeral 1010 denotes sheet material, 1400 does a vibration applying unit arranged in one pinching guide 1421, and 1430 does a guide to arrange an edge of the sheet material. Reference numerals 1422 and 1420 denote guides to make the sheet material pinched, and 1420 does a detection unit.

First of all, predetermined vibration is applied to the sheet material. The vibration applying unit 1400 and detection unit 1420 contact with the sheet material when the guides 1422 and 1420 pinch the sheet material. Then, when the vibration is applied to the sheet material 1010 by the vibration applying unit 1400, a signal is outputted from the detection unit 1420. In addition, the sheet material is pinched by a first member and a second member so that the vibration may be applied to the sheet material, and the vibration is applied from at least one member side. It is good to have the structure of pinching the sheet material at the same time of applying the vibration, or it is also good to apply the vibration after pinching the sheet material.

It is also possible to improve the accuracy of determination by applying the vibration two or more times and averaging respective measurement results.

In addition, when two or more kinds of output signals are obtained by applying two or more kinds of vibrations, the accuracy of identification also becomes higher. Furthermore, it is preferable in such a case to apply second vibration after the vibration of a recording medium by the vibration applied once is attenuated enough or after the vibration becomes below a certain predetermined value. Moreover, the vibration can be applied with an oscillator comprising, for example, a piezoelectric element.

In addition, when the recording medium (sheet) is pinched by the first and second members, for example, the recording medium is pinched with pressure in the range of 1 g/cm² to 500 g/cm². Of course, if the signal can be outputted from the detection unit, the pressure is not limited within this range.

Next, the vibration applied to the sheet material is detected. Detection concerned can be performed by using, for example, a piezoelectric element, and in this case, the vibration is detected as an electrical signal such as a voltage signal.

The piezoelectric element as the detection unit may be provided on at least one of the first member and the second member, or may be also arranged on both. It is possible to have such that the recording medium is pinched between the piezoelectric element unit, arranged on the first member, and the second member structure (i.e., structure that the piezoelectric element receives the vibration through the sheet material).

Although an impact may be applied to selectively convey only one sheet material (recording medium), it is possible to apply the vibration by an oscillator simultaneously with the impact in this case.

In addition, a specific form of the detection unit will be explained.

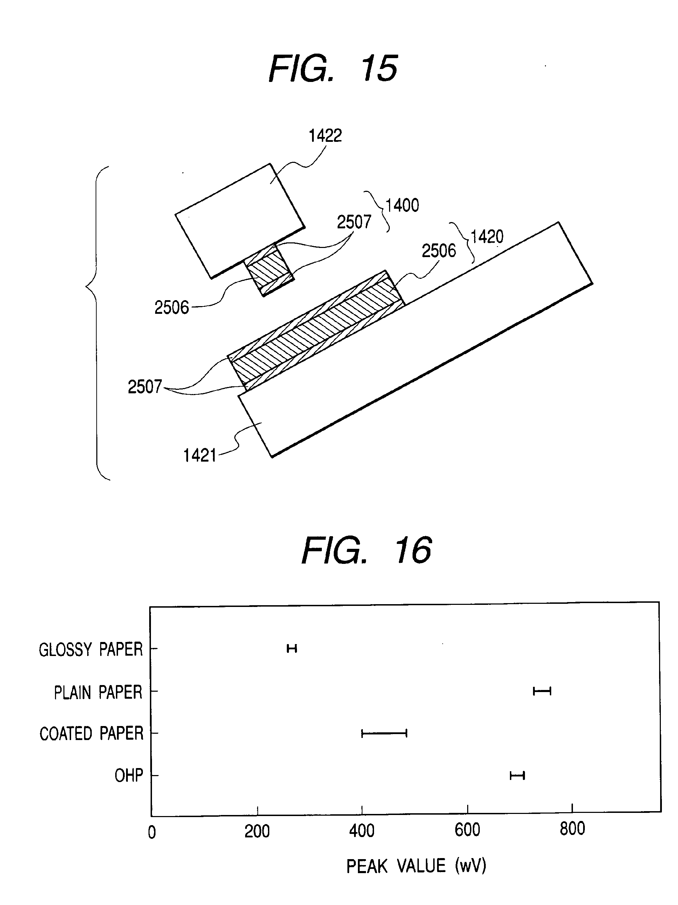

The detection unit 1420 has, for example, a shape shown in FIG. 15. That is, the detection unit 1420 has the structure that electrodes are provided on surfaces of the piezoelectric element 2506. Its detail will be explained in the following embodiment. In addition, so as to prevent a damage of the detection unit by the application of the vibration, a protective layer may be provided. Though the aspect that the detection unit 1420 is installed on the pinching guide 1421 is shown in this diagram, it is also possible to make the structure of providing a concave portion in a member that supports the pinching guide and detection unit, and inserting the detection unit in the concave portion concerned.

In addition, it is preferable that the detection unit possesses two or more surfaces contacting with the sheet material so that the detection unit can sensitively detect the vibration propagating in sheet material.

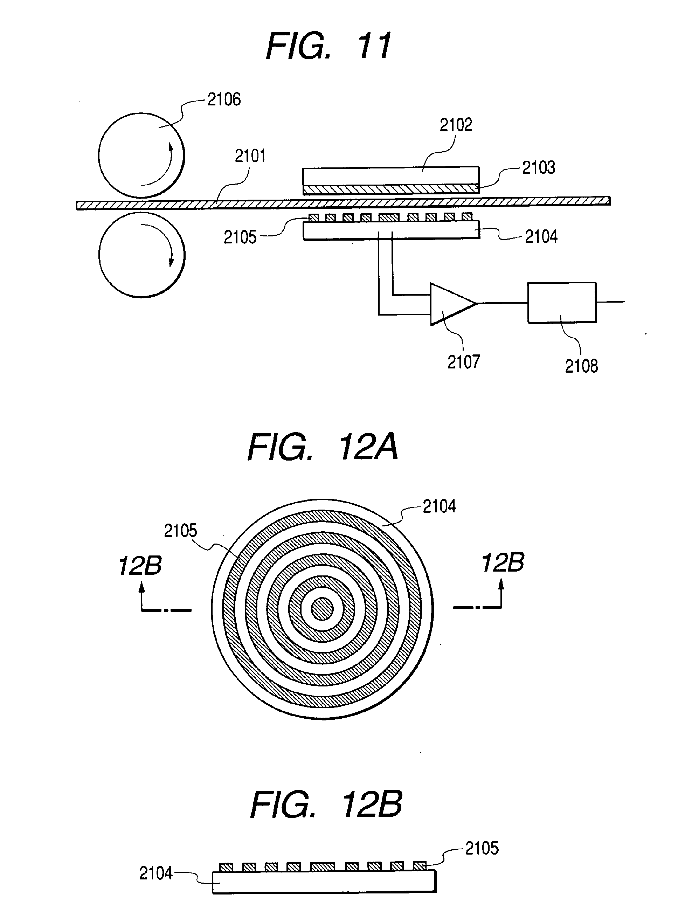

This will be shown by using FIG. 11. FIG. 11 shows sheet material 2101, a base 2102 on which a vibrator is placed, a vibrator 2103, a base 2104 of a detection unit, a detecting element 2105, a pinch roller 2106 for conveying the sheet material, an operational amplifier circuit 2107, and a data input board 2108. In addition, the vibration by the vibrator 2103 can be applied when the sheet material is stationary, or when the sheet material is conveyed by the pinch roller 2106.

An example of structure of the detection unit to which the detecting element 2105 is provided will be shown.

FIGS. 12A and 12B show the structure that the concentric circular irregularity is sequentially arranged. When the detecting element 2105 has this structure of the concentric circular irregularity, it becomes hard for the sheet material to bend. For example, it is possible to make the structure (5 mm in whole diameter) that the concentric circular irregularities in 0.5 mm of intervals are sequentially arranged. At that time, as for the concentric circular detecting element, it is also possible to independently constitute a piezoelectric substance, and upper and lower electrodes. In addition, the vibrator is, for example, a circle of 6 mm in diameter and 0.5 mm in thickness.

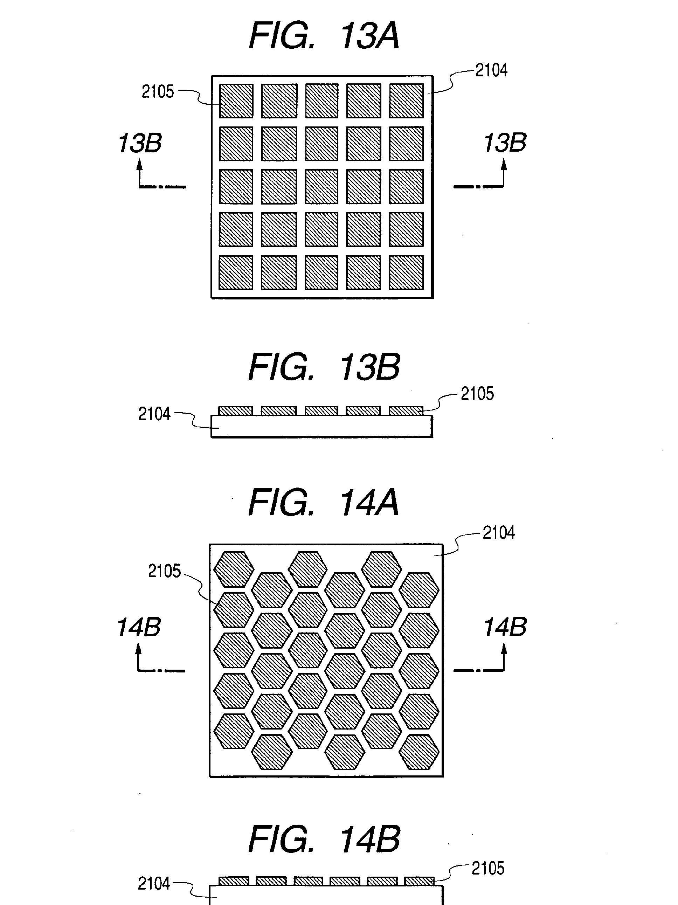

Furthermore, FIGS. 13A and 13B show the structure that square irregularities are arranged in a matrix state.

For example, it is possible to arrange single detecting elements (0.5 mm in thickness) with each square form having a side of 1 mm in a matrix state. A piezoelectric substance, and upper and lower electrodes can be independently constituted in each single detecting element. In addition, the dimensions of the vibrator are, for example, 9 mm in length, 9 mm in width, and 0.5 mm in thickness.

The FIG. 14A and 14B show the structure that irregularities with each orthohexagonal form are arranged in a matrix state. For example, it is possible to arrange single detecting elements (0.5 mm in thickness) with each orthohexagonal form having a side of 0.7 mm in a matrix state. A piezoelectric substance, and upper and lower electrodes may be also independently constituted in each single detecting element. In addition, the dimensions of the vibrator are, for example, 10 mm in length, 10 mm in width, and 0.5 mm in thickness. When the structure that polygonal irregularities with such the same form are arranged is adopted, it is hard for sheet material to bend. When each side of this polygonal irregularity is from 0.1 mm or more to 5 mm or less, the vibrator can be preferably used.

### - Arrangement aspect of detection unit -

It is good to arrange one, or two or more detection units, detecting vibration, one-dimensionally or two-dimensionally. In addition, so long as a sensor in the length being the same as or more than the width of sheet material is used, the width of the sheet material can be detected.

Hereafter, the case where a piezoelectric element is used for the detection unit will be explained.

In addition, if a signal is outputted by vibration, it is also possible to arrange a vibration applying member and detection unit (signal output portion) on the same side of the sheet material. Thus, so long as the vibration can be detected by the piezoelectric element, the position of the piezoelectric element is not limited especially.

That is, the detection unit only has to be in a position in which the electrical signal is outputted from the piezoelectric element by an impact.

When a plurality of sensor portions are used, for example, the arrangement described in FIGS. 5A, 5B, and 5C is possible. This diagram schematically shows a vibration applying unit 1500, and a detection unit (signal output portion) 1520 respectively. FIG. 5A shows an example of arranging the detection units in two positions: a position opposite to the vibration applying unit 1500 through the sheet material 1010; and a position in the same side as that of the vibration applying unit and sheet material.

FIG. 5B shows an example of arranging two signal output portions in positions apart from the vibration applying unit 1500 by the same distance horizontally.

In addition, data concerning the capacitance (electrostatic capacitance) of the sheet material can be obtained.

FIG. 5C shows the case where two sets of vibration applying units and signal output portions are arranged in positions facing the sheet material respectively.

Furthermore, when the vibration applying unit and signal output portion are arranged so as to face each other through the sheet material, or when both the vibration applying units (or, signal output portions) are arranged so as to face each other through the sheet material, it is possible to detect the signal by the vibration as a change of the capacitance of the sheet material.

In addition, when the signal output portions (sensors) are arranged on both sides of the sheet material, it is possible to obtain information on both sides of the sheet material. In order to obtain information on a top side and a back side, that is, which side is the top side or back side, it is good to apply vibration to both sides of the sheet material and to obtain the information concerned from each output signal.

In addition, when the detection unit is also installed in the vibration applying unit, it is preferable with viewing a number of degrees of freedom of equipment design since it becomes unnecessary to arrange the vibration applying unit and detection unit through the sheet material.

Of course, it is also possible to make the vibration applying unit serve as the detection unit. As previously stated, for example, its procedure comprises the steps of vibrating the piezoelectric element that constitutes the vibration applying unit, applying the vibration to the sheet material, once stopping the vibration of the piezoelectric element concerned, and detecting the reverberation of the sheet material by the piezoelectric element concerned. Alternatively, a change in the amplitude of the piezoelectric element or a change in a resonance frequency by the contact with the sheet material is detected by contacting the piezoelectric element, which constitutes the vibration applying unit, with the sheet material while vibrating the piezoelectric element.

In addition, the structure of the vibration applying unit and the detection unit, and the application of vibration to the sheet material can be performed, for example, as follows.

The vibration applying unit is arranged with facing the detection unit, and the sheet material is conveyed to a position in which the sheet material intervenes between the above-mentioned vibration applying unit and detection unit. At that time, the sheet material and the above-mentioned vibration applying unit are first in the separate state (non-contact state) with each other, when the sheet material, which is conveyed, stops, or after stopping, the distance between the vibration applying unit and the detection unit shortens, and hence, the vibration applying unit contacts with the sheet material. The control of the above-mentioned distance is performed by distance control means (a gap control mechanism) constituted by a roller, a spring, etc.

The vibration is applied to the sheet material for the predetermined time when contacting with the sheet material.

In addition, the vibration applying unit and the detection unit are constituted by forming electrodes in both sides of each thin piezoelectric material (the detection unit can be made of thin film). Furthermore, it is good to form a coating layer, which has abrasion resistance by controlling a surface characteristic, in a contact side of the sheet material and the above-mentioned vibration applying unit (and/or the detection unit). The vibration applying unit and the detection unit are fixed to the above-mentioned distance control means or a support member.

### - Material of detection unit -

The above-mentioned sensor portion can be constituted with including inorganic material or organic material that has piezoelectric property, and for example, the inorganic materials such as PZT (lead zirconate titanate), PLZT, BaTiO₃, and PMN-PT(Pb(Mg_{1/3}Nb_{2/3})O₃-PbTiO₃) and organic piezoelectric material are acceptable. When a piezoelectric element is used as the detection unit, it is possible to output a detection signal as a voltage signal without using a power supply. Piezoresistive material (semiconductor etc.) can be also used as the detection unit. As the piezoelectric material capable of being employed as the vibration applying unit or the detection unit, the following types of the piezoelectric material: cantilever type, torsion lever type, and membrane or stack type can be used.

In addition, when it is considered that the above-mentioned signal processing apparatus outputs information on the sheet material, the output apparatus concerned can be regarded as an information output apparatus.

Any matter illustrated in the present Embodiment can be applied to every embodiment and working example described below.

### (Embodiment 2: Method and apparatus for determining type of sheet material)

Next, a method of using the above-mentioned signal output apparatus for determining the type of sheet material, and a determination apparatus will be explained. FIG. 2 shows the outline of a method of detecting the type of sheet material in the present invention.

### -Method for determining type-

First of all, predetermined vibration is applied to the sheet material (S1). A signal is outputted from the detection unit by the application of the vibration (S2). Then, the type of the sheet material is determined on the basis of the outputted signal (S3).

The output signal and information, which is obtained by processing the output signal, on each type of sheet material are stored beforehand, and determination is performed by comparing them with a signal concerned.

In addition, the determination of the type in the present invention is naturally to determine what the type of the sheet material is, and a concept including the determination of what sheet material the sheet material concerned is close to even if it is not known what sheet material the sheet material concerned is. Furthermore, setting for some condition of a controlled object so as to be suitable for the sheet material concerned on the basis of the output signal from the detection unit is just to determine the type of the sheet material. Moreover, the controlled object will be described later.

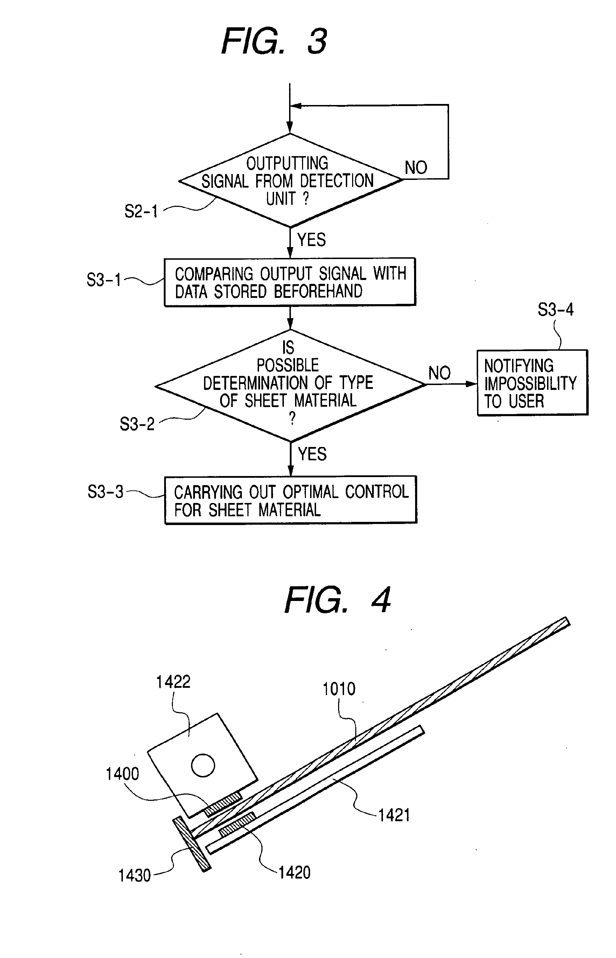

The determination method at the time of image formation can be performed by, for example, a method shown in FIG. 3. That is, when the signal is outputted from the detection unit by the application of the vibration (S2-1), the output signal is compared with data stored beforehand (S3-1), the controlled object is controlled so as to become optimal setting for the sheet material concerned if the determination of the type of the sheet material is possible (S3-3), and a user is notified if the determination is impossible (S3-4). Of course, it is also possible to perform the image formation by the predetermined setting without notifying the user if the determination is impossible.

The determination of the type of sheet material is, for example, the determination of whether the sheet material is paper or a plastic sheet (OHP sheet: transparency for an overhead projector). Though at least two types of determination are possible in the present invention, it is naturally preferable to perform more types of determination, that is, the determination of which the sheet material is, plain paper (plain paper), glossy paper, or coated paper. In addition, it is also good to determine whether a surface of the sheet material has smoothness to be predetermined. Furthermore, it is also good to predetermine whether the sheet material has basis weight or to determine whether having thickness to be predetermined.

Moreover, the coated paper is paper that has a special coating layer on its surface. The glossy paper (photo paper) has a surface given shining finish. Generally, the glossy paper is more expensive than the coated papers.

Of course, when determining the type of sheet material, it is also good to use judgment by the application of the above-mentioned vibration, and the judgment by an optical method described in Japanese Patent Application Laid-Open No. 2000-301805 (U.S. Patent No. 6291829). The optical method is a method of radiating light on a surface of the sheet material and determining a type concerned by using the dependency of transmitted light, scattered light, and reflected light on the type of sheet material.

In addition, when the above-mentioned signal output apparatus is provided in the image forming apparatus, it is good to perform the determination in the image forming apparatus concerned, or, it is good to perform the determination in a computer that is externally connected with the image forming apparatus.

### -Determination apparatus-

The apparatus for determining the type of sheet material is constituted by having a vibration applying unit that contacts with the sheet material and applies vibration from the outside of the sheet material, a detection unit that outputs a signal by the application of the vibration concerned, and, a determination portion that determines the type of sheet material on the basis of the signal from the detection unit. In the determination portion, the type of the above-mentioned sheet material is determined by using information on the sheet material, which is stored beforehand, and a signal from the above-mentioned detection unit.

In addition, the above-mentioned determination apparatus can be installed in an image forming apparatus (printer, copier, facsimile, etc.), an image reader (scanner), a sheet material number counting apparatus, a sheet material type classifying apparatus, a sheet material conveying apparatus, and a sheet payload apparatus.

The determination of the type of sheet material may be performed inside the image forming apparatus concerned and the like, or may be performed by an external computer connected to the image forming apparatus concerned and the like.

### -Treatment of output signal-

A method of determining the type of sheet material will be explained on the basis of a signal (for example, an electrical signal) outputted from a detection unit.

The determination can be performed on the basis of a table where signals according to types of sheet material are recorded beforehand. The determination may be performed automatically, or a user may perform the determination according to a detection signal concerned. In addition, it is also good to perform the signal processing of the detected signal such as the subtraction of an output signal at the time of a recording medium being not pinched. A processing circuit that performs the signal processing concerned can perform the signal processing by using a first signal at the time when the above-mentioned sensor portion receives vibration from an oscillator when the above-mentioned sheet material is not pinched, and a second signal at the time when the above-mentioned sensor portion receives the above-mentioned vibration when the above-mentioned sheet material is pinched. In addition, it is preferable in the above-mentioned table that information at the time when conditions such as temperature and humidity are changed is also stored with an output signal of each sheet material.

The change of the voltage signal in connection with the time can be detected as an electrical signal from a piezoelectric element.

It was found that a peak value is different according to the type of a medium when vibration at predetermined frequency from an oscillator is given to two or more types of sheet material and the vibration of the sheet material caused by the vibration concerned is detected by the detection unit (when the sheet material is pinched between the oscillator and detection unit).

For example, when the vibration with the amplitude of 5 V and a frequency of 170 kHz was applied, peak values of a plastic film sheet (CF301), plain paper (CP-250: new printer paper), coated paper (HR101S: high-resolution paper), and glossy paper (GP301 photo glossy paper) were mutually different, that is, about 690 mV, 740 mV, 440 mV, and 260 mV respectively. (In addition, all of the forms used are products of Canon Inc.)

Therefore, if there is a table where a peak value of each recording medium is recorded beforehand, the determination and detection of the type of sheet material (recording medium) becomes possible on the basis of the table concerned.

In addition, the sheet material that can be identified is not limited to those described above. Furthermore, a period of applied vibration is in a range of tens of kHz to tens of MHz.

After the type of the sheet material is determined, ink ejection quantity is controlled (adjusted) to perform printing in an optimal print mode. The print mode is set by a CPU arranged inside or outside the image forming apparatus. It is possible to omit the communication of a data signal with the outside in the case of the internal CPU. Of course, a user may input the print mode from the outside computer in consideration of the type. Owing to this, since it is possible to omit the operation of sending information such as a type of printing paper and printing mode per printing paper by a user, it is possible to prevent a trouble that printing is not performed in an optimal print mode due to an artificial mistake.

It is good to perform the detection of the type of the recording medium and the setting of the print mode by a sheet of printing paper, by a plural sheet of printing paper, or by arbitrary sheets of printing paper. It is also preferable to make it possible to set beforehand by the image forming apparatus itself or from a computer, connected to outside, whether the detection and determination of the type of the recording medium is performed.

It is also possible to send the information on the type of printing paper and the print mode from a computer connected to an image forming apparatus (for example, a printer) to the image forming apparatus concerned, and to perform printing on the basis of the information.

### - Signal processing for determination -

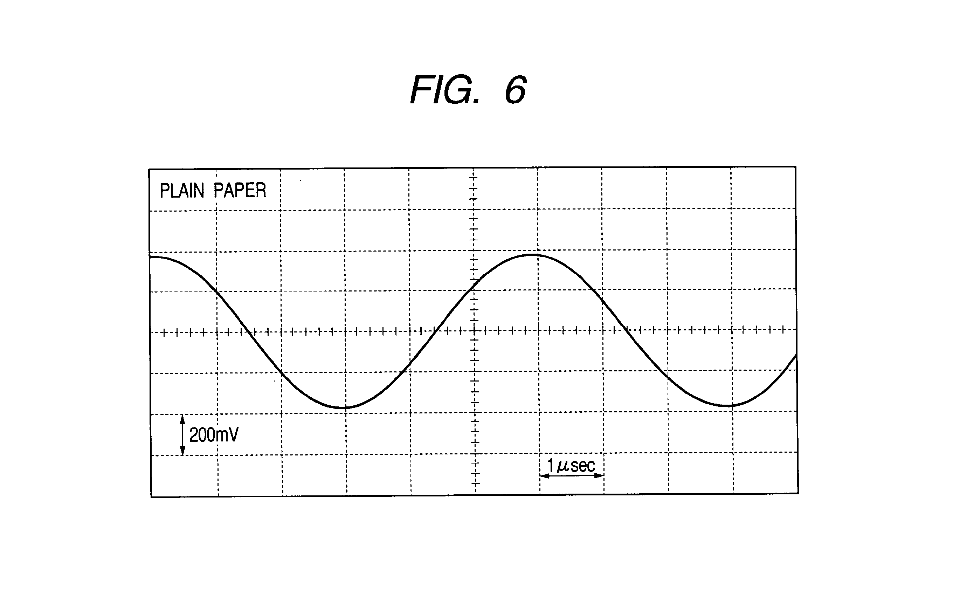

A signal shown in FIG. 6 is outputted from a piezoelectric element when vibration is applied to sheet material by a vibration applying unit. In this graph, the horizontal axis is the time, and the vertical axis is the voltage (potential difference), and this graph shows a signal at the time when the above-mentioned plain paper is used as sheet material and the vibration with the amplitude of 5 V and a frequency of 170 kHz is applied.

In order to determine the type of sheet material, it is possible to use information such as a peak value (amplitude) , difference between waveforms, phases, frequency components, and temporal fluctuations of the vibration, which a vibration applying unit applies, and a signal that a detection unit outputs, and heat generation by the application of vibration.

The propagation of the vibration from the vibration applying unit to the sheet material is greatly influenced by the contact state of both objects. More specifically, the signal detected by the detection unit is greatly different according to the difference of surface irregularity of the sheet material. In addition, inside the sheet material, depending on the material and thickness of the sheet material (for example, a base film or coated material in the case of paper), the detected signal in the detection unit is greatly different.

In addition, since the vibration applied from the vibration applying unit to the sheet material reaches the detection unit with a phase shift to the applied signal due to the delay etc. caused by the propagation time until the arrival to the detection unit, it is also good to detect this. Furthermore, similarly, since the waveform changes due to the combination of these phase shift, strength change according to the propagation, etc., it is also good to detect this.

### - Example of specific structure of determination apparatus -

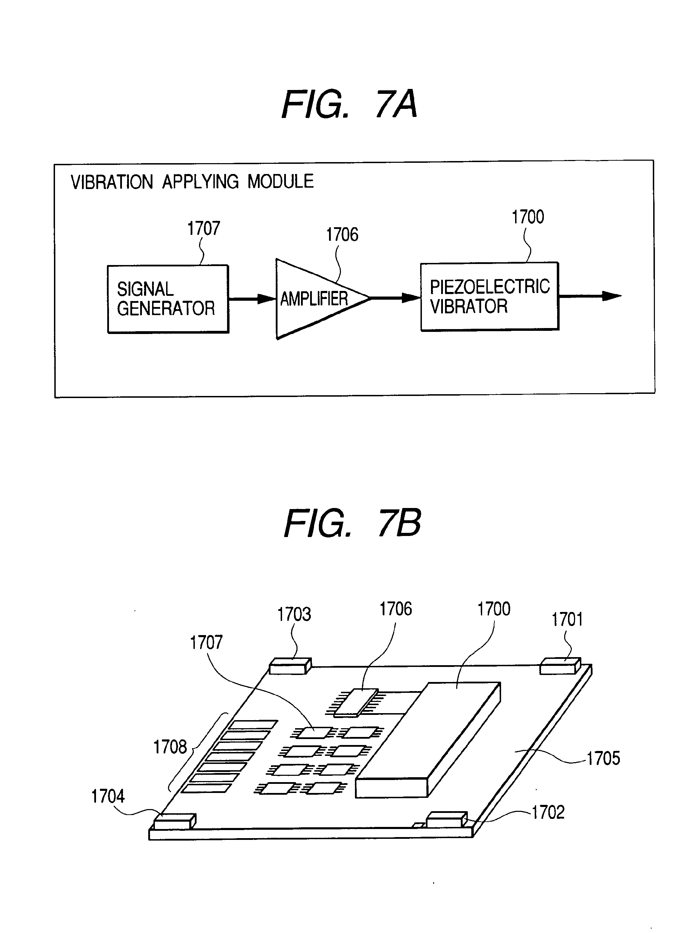

An example of structure of a module that can apply predetermined vibration to the sheet member is shown in FIGS. 7A and 7B.

FIG. 7A is a basic circuit diagram in the vibration applying module. A signal from a signal generator 1707 is amplified by an amplifier 1706, and the amplified signal is inputted into a piezoelectric vibrator 1700. Thus, it becomes possible to apply the vibration to the sheet material.

Reference numeral 1700 in FIG. 7B denotes a piezoelectric vibrator, and this is a part that contacts with the sheet material. Although the piezoelectric vibrator has an electrode, it is good to form a protective layer or a cover so as to prevent the wear-out of an electrode surface. Reference numerals 1701, 1702, 1703 and 1704 denote spacers. Reference numeral 1705 denotes a Si substrate, 1706 does an amplifier, 1707 does a signal generation circuit, and 1708 does input signal electrodes.

The signal generator 1707 and amplifier 1706 are installed on the Si substrate 1705 as an IC, and the piezoelectric vibrator 1700 that is electrically connected to the amplifier 1706 and converts an electrical signal into mechanical vibration is joined. A control signal and electric power, which drives circuits, from the outside of the module are supplied from the input signal electrode 1708.

It is good to make the piezoelectric vibrator by joining material made of bulk material by bonding and the like, or to directly form the piezoelectric vibrator on the Si substrate by the film formation with the sol-gel method etc. In addition, it is also good to remove or thin a part of the Si substrate in the part, which is vibrated by the piezoelectric vibrator, by etching etc.

The vibration is applied since this vibration applying module contacts with the sheet material because the contact pressure and distance of an upper electrode (contact side) of the piezoelectric vibrator and the medium is controlled with a spacer.

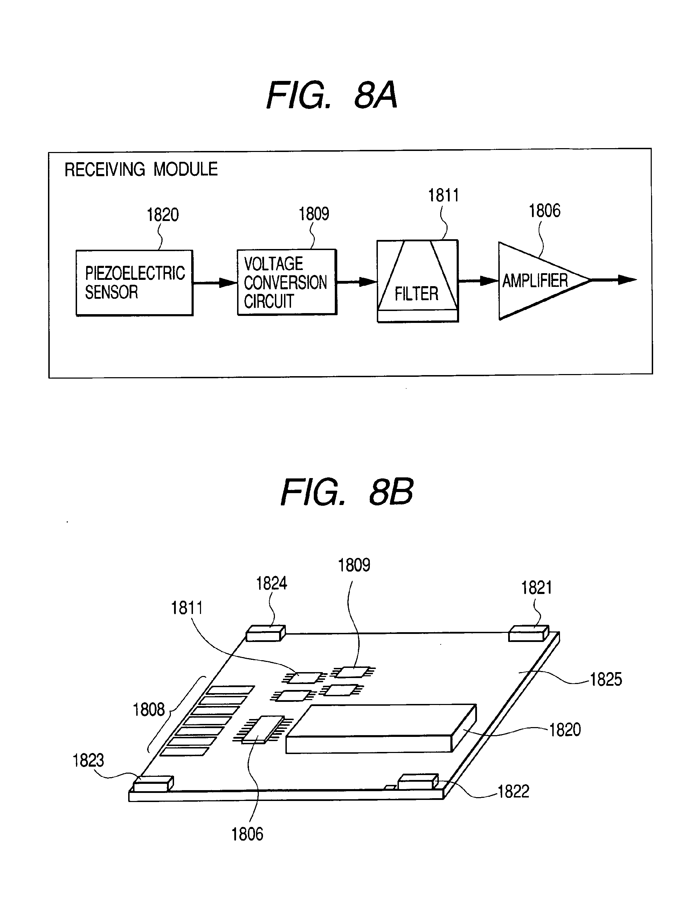

Next, an example of structure of a module that can output a signal caused by vibration will be shown by using FIGS. 8A and 8B.

FIG. 8B is an example of structure of a basic circuit for a receiving module. When a piezoelectric sensor 1820 detects the vibration, a signal corresponding to the vibration is outputted. The outputted signal concerned is inputted into a voltage conversion circuit 1809. After that, the signal is inputted into a filter 1811 so as to cut an unnecessary signal, and further, the signal having passed the filter is amplified by the amplifier 1806 to be outputted.

As shown in FIG. 8B, a voltage conversion circuit 1809, a filter circuit 1811, and an amplifier 1806 are formed on a Si substrate 1825 as an IC, and further, a piezoelectric sensor that is connected to the voltage conversion circuit 1809 electrically and converts mechanical vibration into a voltage signal is joined. An electrical signal is outputted from an output signal electrode 1808 to the outside of the module.

The vibration applied to the medium is detected since the receiving module contacts with the medium because contact pressure and distance of an upper electrode of the piezoelectric sensor (contact side) and the medium is controlled with spacers 1821, 1822, 1823 and 1824. In addition, it is also good to form a protective layer or a cover on an electrode surface so that the electrode on the surface of the sensor should not directly contact with the sheet material.

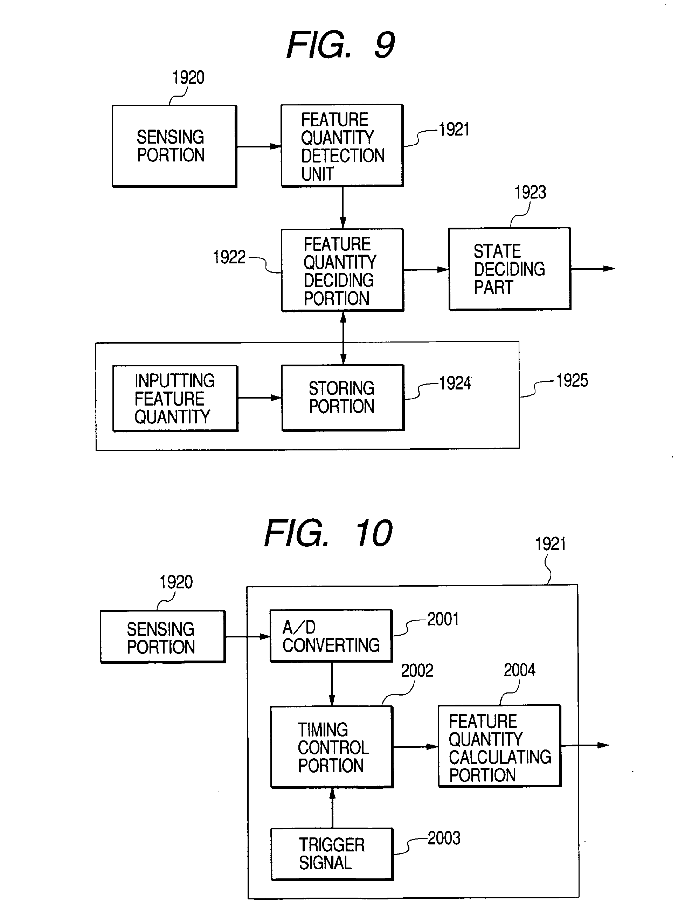

Furthermore, a method of determining the type of sheet material by using the signal from the above-mentioned sensing portion is shown in FIGS. 9 and 10.

A signal from the sensing portion 1920 is inputted into feature quantity detection unit 1921. In the feature quantity detection unit concerned, feature quantity different according to the type of sheet material is extracted from the above-mentioned output signal. As this feature quantity, a peak value, waveform difference and phase difference from the applied vibration, changes of these quantities in connection with time, etc. are mentioned. Feature quantity deciding portion 1922 determines the type of the recording medium by comparing the feature quantity extracted by the feature quantity detection unit with values in the table, which is stored in a study portion 1925, and in which feature quantity by sheet material is recorded. In this manner, in the feature deciding portion, the collation of the feature quantity sent from the feature quantity detection unit with the data table stored in a storing portion is performed, and the feature quantity used for decision is decided. A state deciding part 1923 decides the type of paper or the content of control in a back-end process from the information (feature quantity) from the feature quantity deciding portion. At this time, feedback such as an apparatus status and an environment is performed. In addition, the feature quantity is inputted into the storing portion 1924 in the study portion 1925 beforehand.

A sensing portion 1920 converts the vibration, which a sensor receives, into a voltage signal, and outputs the voltage signal as the change of the voltage signal in connection with the time. When being outputted, the voltage signal is given noise removal in an unnecessary frequency band by the filter and is amplified by the amplifier according to necessity.

In addition, in the feature quantity detection unit 1921, when the signal from the sensing portion is an analog waveform signal as shown in FIG. 10, the signal is A/D converted (2001) to be made a digital signal. A voltage or time reference signal is inputted as a trigger signal 2003, the time and voltage of each peak are converted into numbers on the basis of the digitized waveform and trigger signal in the timing control portion 2002. The above-mentioned feature quantity is extracted among these numbers (2004).

### (Embodiment 3: Apparatus and system comprising each function of determining the type of sheet material)

An apparatus explained in this embodiment is an image forming apparatus (printer, copier, facsimile, or the like) that comprises the above-mentioned detection unit, an image reader (scanner, or page reader), a sheet material conveying apparatus, a sheet material number counting apparatus, a sheet material type classifying apparatus, a sheet feeder, and a sheet payload apparatus (hereafter, these apparatuses may be called "image forming apparatus and the like" in a lump). The determination of the type of sheet material may be performed inside the image forming apparatus concerned and the like, or may be performed by an external apparatus (i.e., a computer) connected to the image forming apparatus concerned and the like.

After the type of sheet material is determined, a controlled object is controlled so that setting may become optimal for sheet material concerned.

### (Controlled object)

After the type of sheet material is determined, a controlled object is controlled so that setting may become optimal for sheet material concerned.

The controlled object is, for example, ink ejection quantity of ink, a conveying condition of sheet material in conveying (a gap between conveying rollers, conveying speed, pressure between convey rollers, etc.), or, a temperature condition (for example, a temperature condition in the fixing of toner) for performing image formation on the sheet material. Alternatively, it is also good to make go/no go judgment of printing or printed letters, or an alarm to a user (in the case that the type of a form does not correspond to a specified print mode) the controlled object. Alternatively, it is also good to control an operation condition (drying time of ink jet or number of sheets per staple) after sorting and discharging of forms (sorter) or sheet discharging.

Of course, it is also good to set two or more controlled objects at appropriate conditions to the sheet material. For example, when the type of sheet material is determined, it is also good not only to control a condition concerning the conveying of the sheet material, but also to control a condition concerning a recording head (ink ejection quantity, and the like) .

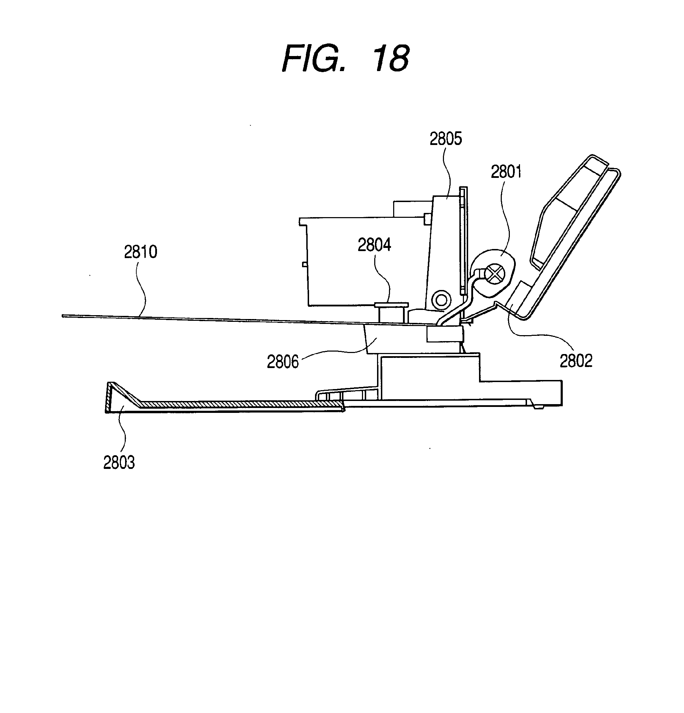

In addition, FIG. 18 shows, for example, a schematic sectional view of an ink jet printer. Reference numeral 2801 denotes a sheet feeding roller, 2802 does a detection unit, 2803 does a sheet discharging tray, 2804 does a print head, 2805 does a circuit portion, 2806 does a conveying mechanical portion, and 2810 does sheet material.

Hereafter, the case of controlling ink ejection quantity will be explained in detail.

After the type of sheet material is determined, ink ejection quantity is controlled (adjusted) to perform printing in an optimal print mode. The print mode is set by a CPU arranged inside or outside the image forming apparatus. It is possible to omit the communication of a data signal with the outside in the case of the internal CPU. Of course, a user may input the print mode from the external computer in consideration of the type. Owing to this, since it is possible to omit the operation of sending information such as a type of printing paper and printing mode per printing paper by a user, it is possible to prevent a trouble that printing is not performed in an optimal print mode due to an artificial mistake. It is good to perform the detection of the type of sheet material and the setting of the print mode by a sheet of printing paper, by a plural sheet of printing paper, or by arbitrary sheets of printing paper. It is also preferable to make it possible to set beforehand by the image forming apparatus itself or from a computer, connected to outside, whether the detection and determination of the type of sheet material is performed.

It is also possible to send the information on the type of printing paper and the print mode from a computer connected to an image forming apparatus (for example, a printer) to the image forming apparatus concerned, and to perform printing on the basis of the information.

An image forming apparatus according to the present invention is constituted by comprising, for example, the above-mentioned signal output apparatus, image forming means of forming an image by ejecting ink on sheet material, and ink ejection quantity control means that determines the type of the above-mentioned sheet material on the basis of a signal from the above-mentioned signal output apparatus, and controls ink ejection quantity by the determination.

In addition, an image forming apparatus according to the present invention is constituted by comprising, for example, the above-mentioned signal output apparatus, image forming means of forming a toner image on sheet material, fixing means of fixing the above-mentioned toner image on the above-mentioned sheet material by heating and pressing the above-mentioned toner image on the above-mentioned sheet material, and temperature control means of determines the type of the above-mentioned sheet material on the basis of a signal from the above-mentioned signal output apparatus, and controls the temperature of the above-mentioned fixing means.

Furthermore, an image forming apparatus according to the present invention is constituted by comprising the signal output apparatus mentioned above, image formation means to form an image on the above-mentioned sheet material with a thermal head, and power control means of determining the type of the above-mentioned sheet material on the basis of a signal from the above-mentioned signal output apparatus, and, as a result, controls the supply power to the above-mentioned thermal head.

An example will be shown, the example in which the present invention is applied to a system comprising an image forming apparatus and a computer that is connected inside or outside the image forming apparatus. For example, a first step of contacting with sheet material in an image forming apparatus and applying vibration and a second step of outputting a signal from a detection unit owing to the first step are executed, and the determination of the type of sheet material is performed on the basis of the above-mentioned signal by a computer connected inside or outside the image forming apparatus.

### Examples

### (Example 1: Signal outputting apparatus)

As an example of the present invention, a printing paper identification apparatus used for an ink jet printer will be explained on the basis of drawings (FIGS. 4, 6, 15, and 16). An ink jet printer is a printer that makes the liquid such as ink ejected by using heat (heater) or electricity (piezoelectric element).

FIG. 4 shows a schematic diagram of a paper conveying mechanism used to arrange an edge of printing paper inserted from a tray in an ink jet printer. Reference numeral 1010 denotes printing paper, 1400 does an oscillator that is arranged in one pinching guide, 1430 does a guide to arrange an edge of printing paper, 1422 and 1420 do guides for making printing paper pinched, and 1420 does a receiving sensor. In this example, each PZT (lead zirconate titanate) that was a piezoelectric substance was used as the oscillator and receiving sensor. PZT had the structure of being sandwiched by platinum electrodes vertically, and its dimensions were 20 mm in length, 7 mm in width, and 0.3 mm in thickness. As shown in FIG. 15, the oscillator and receiving sensor were arranged to be mutually orthogonal through a recording medium, and an area of their overlapping part was made constant, that is, 7 mm². It is desirable that an area of a surface of the sensor portion that faces the recording medium is larger than that of the oscillator. In FIG. 15, reference numerals 2506 and 2507 are electrodes on the surfaces of the piezoelectric element.

In this example, the printer inserted the printing paper 1010 in the edge guide 1430, and the pinching guide 1421 inserted the printing paper into a gap with another pinching guide 1422. A sine wave with a resonance frequency (amplitude of 5 V and a frequency of 170 kHz) was applied to the oscillator 1400 installed in the pinching guide 1422 at this time, and the sine wave (FIG. 6) that was attenuated according to a paper type was outputted through the printing paper from the receiving sensor 1420 arranged in the pinching guide 1421.

FIG. 6 shows a detection signal in the case of plain paper. Thus, the signal output apparatus was achieved.

### (Example 2: Determination apparatus)

Though the vibration was applied to plain paper in the first example, a similar experiment was performed to glossy paper, coated paper, and plastic sheets (CHP forms), and then, the result shown in FIG. 16 was obtained.

If a data table that corresponds to the drawing concerned is prepared beforehand, it becomes possible to determine the type of sheet material by using this peak value.

That is, a processor records a peak value, read from the output signal, as data to identify the paper type. Then, the processor identifies the paper type of the printing paper by comparing data concerned with the data table.

Apparently from FIG. 16, it is possible to group peak values according to the paper types. It is possible to clearly distinguish four regions, that is, a glossy paper region, a plain paper region, a coated paper region, and an OHP form region. In this manner, after the type of printing paper is identified, an arithmetic unit connected to the printer performs rendering (drawing) in a print mode of the ink jet suitable for the paper type that the processor identified, and the printer conveys printing paper by a paper conveying mechanism to a position, in which the printing paper faces a print head, to start printing. If a lot of sheets are printed, it is possible that the processing similar to the above-mentioned is performed while one sheet is printed, and the processor identifies the paper type to send the paper type data to the arithmetic unit in the printer. Since it takes three seconds per sheet in the case of 20 ppm in usual print, paper type detection can function enough. In addition, though PZT (lead zirconate titanate) was used in the above-mentioned first and second examples, piezoelectric material is not limited only to PZT, but inorganic material such as PLZT, BaTiO₃, and PMN-PT, and organic piezoelectric materials can be used. As another example, it is also possible to make the structure of forming the pinching guide 1422 with an organic piezoelectric substance, and making the pinch roller an oscillator or a receiving sensor.

### (Example 3: Control)

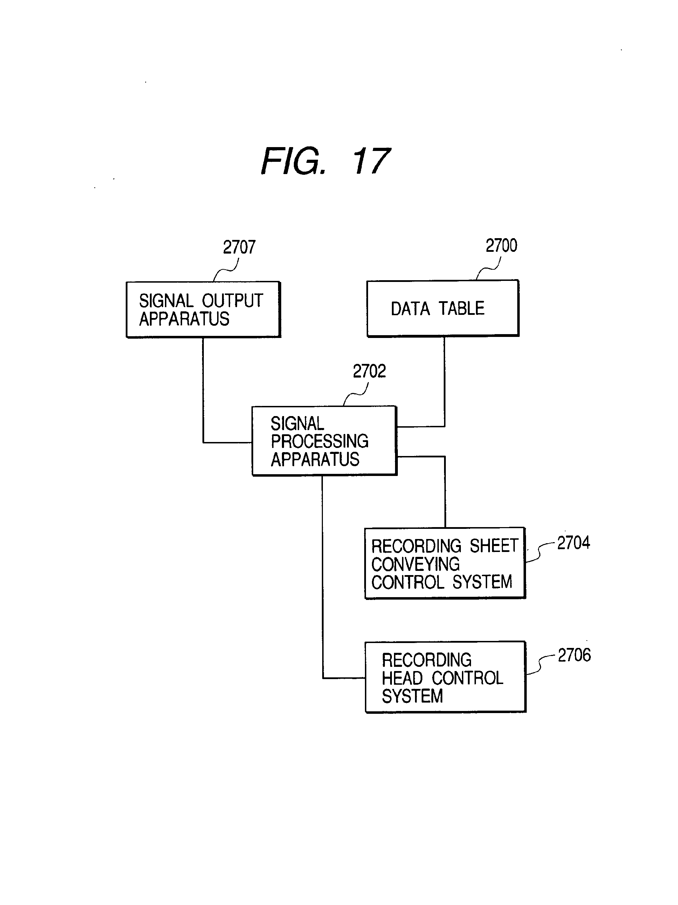

The following shows what control can be performed if a signal output apparatus 2707 and a data table 2700 are provided, using Fig. 17.

A signal from the signal output apparatus 2707 is transmitted to a signal processing apparatus 2702, the signal which is compared with a value of the data table 2700 prepared beforehand, and the type, and the front and back of the recording sheet are identified.

In addition, since electrostatic capacity can be measured if a vibration applying unit and a detection unit are arranged as facing each other through the recording sheet, it also becomes possible to identify the number of the recording sheets. An optimal record mode is decided according to this identified type of the recording sheet, a signal is sent from the signal processing apparatus 2702 to a recording sheet conveying control system 2704 and a recording head control system 2706, and a paper feed mechanism and an ink jet head are controlled so as to obtain the conveying speed and ink ejection quantity that correspond to the decided record mode. In addition, if the front and back of the recording sheet is wrong, it is possible to display the error or to send the recording sheet back.

A signal output apparatus comprises a vibration applying unit that contacts with and applies a vibration to a sheet, and a detection unit that outputs a signal by the vibration. An apparatus for determining a type of a sheet comprises a vibration applying unit that contacts with and applies a vibration to a sheet, and a detection unit that outputs a signal by the vibration, wherein a type of the sheet is determined on the basis of the signal from said detection unit. An image forming apparatus comprises a vibration applying unit that contacts with and applies a vibration to a sheet, and a detection unit that outputs a signal by the vibration.

A method for determining a type of sheet comprises the steps of contacting with and applying vibration to sheet, outputting a signal from a detection unit owing to the contacting and applying step, and determining a type of sheet on the basis of the signal.

## Claims

1. A signal output apparatus comprising: a vibration applying unit that contacts with and applies a vibration to a sheet; and a detection unit that outputs a signal by the vibration.

2. The signal output apparatus according to claim 1, wherein said detection unit is comprised of a piezoelectric element.

3. The signal output apparatus according to claim 1, wherein said detection unit is provided in a position where said detection unit faces said vibration applying unit through said sheet.

4. The signal output apparatus according to claim 1, wherein said detection units are installed on both of a top side and a back side of said sheet.

5. The signal output apparatus according to claim 1, wherein said detection unit has two or more faces contacting with said sheet.

6. The signal output apparatus according to any one of claims 1 to 5, wherein said vibration is applied to said sheet when said sheet is stationary.

7. The signal output apparatus according to claim 6, wherein said stationary state is a state where said sheet is not being conveyed substantially.

8. The signal output apparatus according to claim 1, further comprising a gap control mechanism that controls a gap between said vibration applying unit and said sheet so that a state may change from a state of said vibration applying unit and said sheet not contacting with each other to a state of both contacting with each other at the time of the application of said vibration.

9. The signal output apparatus according to claim 1, wherein said vibration applying unit changes from a non-contact state with said sheet to a contact state with said sheet when said vibration is applied.

10. The signal output apparatus according to claim 1, wherein said signal is a signal used for determination of a type of said sheet.

11. An apparatus for determining a type of a sheet, comprising: a vibration applying unit that contacts with and applies a vibration to a sheet; and a detection unit that outputs a signal by the vibration, wherein a type of the sheet is determined on the basis of the signal from said detection unit.

12. The apparatus for determining a type of sheet according to claim 11, wherein a type of said sheet is determined by using information on the sheet which is stored beforehand and a signal from said detection unit.

13. The apparatus for determining a type of sheet according to claim 11, wherein said vibration is applied when said sheet is stationary.

14. The apparatus for determining a type of sheet according to claim 11, wherein said detection unit has two or more faces that contact with said sheet.

15. The apparatus for determining a type of sheet according to claim 11, wherein a type of said sheet is determined by using any one selected from the group consisting of a peak value of an output signal from said detection unit, a difference in wave form or phase between said vibration which said vibration applying unit applies and the signal that said detection unit outputs.

16. An image forming apparatus comprising: a vibration applying unit that contacts with and applies a vibration to a sheet; and a detection unit that outputs a signal by the vibration.

17. The image forming apparatus according to claim 16, wherein the image forming apparatus sets a condition of a controlled object on the basis of a signal from said detection unit.

18. The image forming apparatus according to claim 17, wherein said image forming apparatus forms an image by making ink ejected, and said controlled object is ink ejection quantity.

19. The image forming apparatus according to claim 17, wherein said image forming apparatus forms an image by using toner, and said controlled object is at least any one selected the group consisting of temperature of sheet, an interval between conveying rollers, and conveying speed.

20. The image forming apparatus according to claim 17, wherein said image forming apparatus forms an image with a thermal head, and said controlled object is power to be supplied to said thermal head.

21. A method for determining a type of sheet, comprising the steps of
contacting with and applying vibration to sheet;
outputting a signal from a detection unit owing to the contacting and applying step; and
determining a type of sheet on the basis of the signal.

22. The method for determining a type of sheet according to claim 21, wherein said contacting and applying step is performed when said sheet is stationary.

23. An apparatus performing the method for determining a type of sheet according to claim 21.
